# EUROPÄISCHE PATENTSCHRIFT

(11) **EP 2 706 306 B1**
(45) Veröffentlichungstag und Bekanntmachung des Hinweises auf die Patenterteilung: **18.05.2016**
(21) Anmeldenummer: 12006301.1
(22) Anmeldetag: 07.09.2012
(51) Int. Cl.: F24J 2/04, F24J 2/46, F24J 2/05, F16L 41/08

(54) **Isolierglasanordnung und Verfahren zu seiner Herstellung**
Insulating glass assembly and method for its production
Agencement de vitre isolante et son procédé de fabrication

(43) Veröffentlichungstag der Anmeldung: 12.03.2014
(73) Patentinhaber: ODB-Tec GmbH & Co.KG, 41468 Neuss (DE)
(72) Erfinder: Ostermann, Dieter, Dr., 41468 Neuss (DE); Ross, Heinz-Herrmann, 26906 Dersum (DE)
(74) Vertreter: Albrecht, Ralf

(56) Entgegenhaltungen:
- EP-A1- 1 312 848
- EP-A2- 2 244 031
- DE-A1- 3 000 783
- DE-A1-102008 064 010
- GB-A- 2 117 109
- US-A- 4 226 444

## Beschreibung

Die Erfindung betrifft eine Isolierglasanordnung nach dem Oberbegriff von Anspruch 1. Eine solche Anordnung ist in EP-A-2244031 offenbart. Die Erfindung betrifft ferner ein Verfahren zur Herstellung einer solchen Isolierglasanordnung.

Es sind Isolierglasanordnungen bekannt, bei denen zwei Glasscheiben zu beiden Seiten eines Rahmens angeordnet und durch den Rahmen voneinander beabstandet sind. Der Rahmen kann daher auch als Abstandshalter bezeichnet werden. Die beiden Glasscheiben sind parallel zu einer Scheibenebene angeordnet und weisen in einer zu einer Scheibenebene orthogonalen Richtung einen durch den Rahmen vorgegebenen Abstand voneinander auf. Der Rahmen ist üblicherweise nahe oder an den Aussenkanten der Glasscheiben umlaufend angeordnet. Von den beiden Scheiben und dem Rahmen wird ein Innenraum gebildet, der vorzugsweise gasdicht abgeschlossen ist. In Richtung orthogonal zur Scheibenebene weist die Isolierglasanordnung eine Gesamthöhe auf, die dem Abstand zwischen den Aussenseiten der beiden Glasscheiben entspricht. Der Innenraum weist in zur Scheibenebene orthogonalen Richtung eine Höhe auf, die dem Abstand der beiden Innenseiten der Scheiben voneinander entspricht.

Aus der WO 03/028114A2 ist bekannt, Fotovoltaik-Module in Isolierverglasungen einzusetzen. Solarkollektoren sind beispielsweise aus EP 2 244 031 A2 und EP 2 244 032 A2 bekannt. Die DE 10 2010 047 291 B3 und die DE 10 2008 064 010 A1 beschreiben einen Isolierglasaufbau mit einem solarthermischen Absorber.

In der Praxis ergeben sich bei der Integration von Bauteilen, insbesondere solarthermischen Absorbern, in den Innenraum von Isolierglasanordnungen immer wieder Probleme, insbesondere hinsichtlich der für den konstruktiven Aufbau zur Verfügung stehenden Bauhöhe und der Gewährleistung einer dauerhaften Dichtigkeit, insbesondere Gasdichtigkeit, nach Isolierglasstandards.

Eine Insolierglasanordnung dieser Art ist aus der EP 2 244 031 A2 bekannt. Die aus dieser Druckschrift vorbekannte Insolierglasanordnung umfasst zwei parallel zueinander angeordnete Glasscheiben mit einem dazwischen angeordneten Rahmen. Der Rahmen und die Glasscheiben definieren einen Innenraum, der mit einem Gas gefüllt ist. Innerhalb des Innenraums ist ein Absorberrohr vorgesehen, das durch die hintere Glasscheibe aus dem Innenraum herausgeführt ist. Im Bereich einer entsprechenden Durchtrittsöffnung der hinteren Glasscheibe ist ein Durchführungselement vorgesehen, das von den beiden miteinander verschraubten Flanschelementen gebildet wird. Das innere Flanschelement definiert dabei eine zentrale Bohrung, welche von dem Absorberrohr durchgriffen wird. Das Absorberrohr ist mit dem inneren Flansch fest durch eine Lötverbindung verbunden. Außenseitig sind die Spalte zwischen den Flanschelementen und der Glasscheibe durch O-Ringe und Butyl enthaltende Dichtungsmittel abgedichtet.

Eine Problematik, die mit einer solchen Isolierglasanordnung verbunden ist, besteht darin, eine Insolierglasanordnung der eingangs genannten Art anzugeben, bei der die für eine Isolierglasanordnung erforderliche dauerhafte Dichtigkeit, insbesondere Gasdichtigkeit und Dichtigkeit gegen Dampfdiffusion verbessert ist.

Die Integration eines Absorbers in eine Isolierglasanordnung diese weitaus größeren Temperaturschwankungen ausgesetzt, als dies für Isolierglas bekannt ist. Ein besonderes Risiko stellt dabei die Überhitzung im Falle eines Ausfalls des Fluidtransports durch ein Anschlusssystem dar. Auch eine statische Erhitzung bis ca. 180° C muss sicher beherrscht werden, um sowohl die Anlagensicherheit, als auch die weitere Funktionsweise der Isolierglasanordnung sowie die gebäudetechnische Integration (Ausdehnung, Passgenauigkeit, etc.) zu gewährleisten. Das Vorsehen eines aus dem Innenraum herausgeführten Fluidanschlusses eines Absorbers führt bei der bekannten Lösung dazu, dass die für eine Isolierglasanordnung erforderliche langfristige Gasdichtigkeit, insbesondere eine Dichtigkeit gegenüber Dampfdiffusion, nicht mehr gewährleistet ist, da die beim Erwärmen entstehenden hohen Temperaturen von deutlich über 110° C des Fluids zu einer entsprechenden Erwärmung sowohl des Absorbers als auch des Fluidanschlusses führen und damit auch die Dichtungsmittel, welche zur Abdichtung der Durchführung des Fluidanschlusses vorgesehen sind, verflüssigen. Insbesondere Dichtungsmittel, die Butyl aufweisen oder daraus bestehen, erzeugen zwar eine hohe Gasdichtigkeit, fangen jedoch bei Temperaturen von ca. 110° C an zu fliessen und verlieren damit ihre Dichtungswirkung. Andere temperaturbeständigere Dichtungsmittel wie beispielsweise Silikon weisen nicht die erforderliche Dichtungswirkung gegenüber Gas aus, so dass es zu einem vorzeitigen "Erblinden" der Isolierglasanordnung kommen kann. Das Eindringen von Wasserdampf in eine Isolierglasanordnung kann die isolierende Wirkung zerstören, so dass auch vor diesem Hintergrund eine entsprechende Dichtigkeit über eine Lebensdauer von mindestens 15 bis 20 Jahren erforderlich ist.

Es ist daher eine Aufgabe der vorliegenden Erfindung, eine Isolierglasanordnung der eingangs genannten Art anzugeben, bei der die für eine Isolierglasanordnung erforderliche dauerhafte Dichtigkeit, insbesondere Gasdichtigkeit und Dichtigkeit gegen Dampfdiffusion, verbessert ist. Ebenfalls ist es eine Aufgabe der Erfindung, für eine verbesserte Isolierglasanordnung ein entsprechendes Herstellungsverfahren anzugeben.

Diese Aufgabe wird bei einer Isolierglasanordnung der eingangs genannten Art durch die kennzeichnenden Merkmale von Anspruch 1 sowie das Verfahren nach Anspruch 13 gelöst.

Die erfindungsgemäße Lösung sieht vor, dass an den Fluidanschluss ein Durchführungselement ganz oder teilweise angegossen ist. Auf diese Weise wird zwischen dem Fluidanschluss und dem Durchführungselement eine grossflächige stoffschlüssige Verbindung hergestellt, die die bei Isolierglasanordnungen erforderliche Gasdichtigkeit erfüllt.

Dabei ist der hierfür verwendete Gusswerkstoff thermisch isolierend ist. Besonders bevorzugt ferner, dass der Gusswerkstoff gasdicht ist. Insbesondere bevorzugt ist ein nicht-metallischer Gusswerkstoff.

Durch das Anformen des Durchführungselements an den Fluidanschluss entfällt eine separat abzudichtende Verbindungsstelle zwischen Fluidanschluss und Durchführungselement, so dass die Dichtigkeit der Isolierglasanordnung verbessert wird. Insbesondere wenn der Gusswerkstoff thermisch isolierend ist, wird zudem die Abdichtung des Durchführungselements gegenüber angrenzenden Elementen der Isolierglasanordnung erleichtert, indem dort gasdichte, weniger temperaturbeständige Abdichtungsmittel eingesetzt werden können, da das Durchführungselement die hohen Temperaturen des Fluidanschlusses vorzugsweise so isoliert, dass an den Rändern bzw. Seiten des Durchführungselements Temperaturen von unter 110° C, vorzugsweise deutlich unter 100° C auftreten, die nicht zur Verflüssigung von gasdichten Dichtungsmitteln führen.

Das Durchführungselement kann beispielsweise dadurch an den Fluidanschluss angeformt sein, dass eine entsprechende Form um den Fluidanschluss angeordnet wird, die mit einem Gusswerkstoff gefüllt wird. Wenn der Gusswerkstoff erhärtet ist, kann die Form abgenommen werden, so dass das an den Fluidanschluss angeformte Durchführungselement bestehen bleibt. Eine weitere Möglichkeit ist es, mit einer verlorenen Form zu arbeiten, bei der der Gusswerkstoff stoffschlüssige Verbindungen sowohl zum Fluidanschluss als auch zur verlorenen Form herstellt und das Durchführungselement sowohl die verlorene Form als auch den darin ausgehärteten Gusswerkstoff umfasst. Die verlorene Form kann dabei vorzugsweise aus dem gleichen Gusswerkstoff bestehen oder diesen aufweisen und vorzugsweise vorgefertigt sein. Das Anformen des Durchführungselements an den Fluidanschluss erfolgt vorzugsweise vor dem Anordnen des Absorbers im Innenraum.

Der solarthermische Absorber kann beispielsweise ein Flachkollektor oder Plattenkollektor mit einer dem Innenraum angepassten geringen Bauhöhe sein. Existierende Solarkollektoren haben eine zu grosse Bauhöhe, beispielsweise von über 35mm, für eine Integration als Isolierglasanordnung in eine Fassade. Die erfindungsgemässe Isolierglasanordnung mit Absorber hingegen hat vorzugsweise eine Bauhöhe orthogonal zur Scheibenebene von weniger als 20 mm, insbesondere von 18mm. Dieses Konzept ermöglicht die einfache Realisierung der Gebäudeintegration von Solarthermie. Durch den schmalen Aufbau der Isolierglasanordnung werden keine gesonderten Aufbauten der Fensterrahmen erforderlich. Die erfindungsgemässe Isolieranordnung ist hinsichtlich ihrer Dimensionierung uneingeschränkt skalierbar.

Die erfindungsgemässe Isolierglasanordnung ermöglicht somit die Integration eines Absorbers in ein Isolierglas und damit eine bevorzugte Herstellung durch die industrielle Glasverarbeitung. Zudem ist bevorzugt, den Innenraum mit einem Gas, beispielsweise mit Argon oder Krypton, auszufüllen, um Wärmeverluste durch Wärmetransport vom Absorber zur Scheibe zu verringern. Eine Herstellung in Isolierglasproduktionsanlagen kann eine solche Gasfüllung im Innenraum erleichtern.

Der Absorber ist fluidführend, d. h. in dem Absorber kursiert ein Fluid, das durch die Sonneneinstrahlung erwärmt wird. Dafür weist der Absorber einen Fluidanschluss auf, vorzugsweise zwei Fluidanschlüsse, einen für die Zufuhr von erwärmenden Fluid und einen für die Abfuhr von erwärmten Fluid. Wenn im Folgenden von einem Fluidanschluss die Rede ist, gelten die Ausführungen ebenso für einen zweiten oder weitere Fluidanschlüsse des Absorbers. Vorzugsweise hat der Fluidanschluss einen kreisförmigen Querschnitt und ist beispielsweise als Leitungsabschnitt ausgebildet, über den das fluidführende Innere des Absorbers mit einem Fluidleitungssystem ausserhalb der Isolierglasanordnung verbunden werden kann.

Der hier beschriebene Aufbau der Isolierglasanordnung mit einer ersten und einer zweiten Scheibe kann auch durch eine dritte Scheibe ergänzt sein, die vorzugsweise durch einen weiteren Rahmen oder Abstandshalter von der zweiten Glasscheibe beabstandet angeordnet ist, so dass von der zweiten und dritten Glasscheibe und dem dazwischen angeordneten weiteren Rahmen ein weiterer Innenraum gebildet ist. Die hier beschriebenen Merkmale, Ausführungen und Vorteile der Isolierglasanordnung mit dem im Innen-raum angeordneten solarthermischen Absorber gelten gleichermassen auch für Isolierglasanordnungen mit drei Scheiben.

Die der Sonneneinstrahlung zugewandte der beiden Glasscheiben ist vorzugsweise aus eisenarmem Glas ausgebildet, das eine Antireflexbeschichtung aufweisen kann. Die der Sonneneinstrahlung abgewandte Scheibe kann auf ihre dem Innenraum zugewandten Seite vorzugsweise eine Low-E-Beschichtung aufweisen. Die der Sonneneinstrahlung zugewandte Seite des Absorbers kann vorzugsweise eine selektive Beschichtung auf-weisen. Zwischen der ersten Scheibe und dem Rahmen sowie zwischen der zweiten Scheibe und dem Rahmen erfolgt vorzugsweise jeweils eine Abdichtung mit einem gas-dichten Dichtungsmittel, das vorzugsweise Butyl aufweist oder daraus besteht.

In einer bevorzugten Ausführungsform der Erfindung ist der Fluidanschluss mit dem Durchführungselement durch den Rahmen aus dem Innenraum herausgeführt.

In dieser Ausführungsform, liegt die Durchführungsrichtung parallel zur Scheibenebene und der Fluidanschluss ist seitlich aus der Isolierglasanordnung hinausgeführt. Dabei tritt der Fluidanschluss durch den zwischen den beiden Glasscheiben angeordneten Rahmen aus dem Innenraum raus, wobei ein Durchführungselement zwischen dem Fluidanschluss und dem Rahmen angeordnet ist. Diese Art der Durchführung des Fluidanschlusses an einer Seite der Isolierglasanordnung ist von Vorteil insbesondere bei der Installation der Isolierglasanordnungen in einer Fassade bzw. Verglasungssystem, d. h. bei der Integration in ein Gebäude: Auf der sichtbaren Oberfläche der Isolierglasanordnungen sind keine Anschlüsse oder Leitungen vorhanden, die beschädigt werden oder auf denen sich Ablagerungen bilden können. Die Durchführung des Fluidanschlusses durch den Rand der Isolierglasanordnung ermöglichen eine optisch ansprechende Integration in die Gebäudehülle. Der Fluidanschluss weist vorzugsweise einen Querschnitt auf, der geringer ist als der Abstand zwischen den beiden Scheiben, insbesondere einen so geringen Querschnitt, dass das Durchführungselement einen Querschnitt des Fluidanschlusses umgeben und gleichzeitig im Rahmen zwischen den Scheiben angeordnet sein kann.

Die erfindungsgemässe Ausbildung des Durchführungselements ganz oder teilweise aus einem Gusswerkstoff, der an den Fluidanschluss angegossen ist, wird eine gasdichte Durchführung des Fluidanschlusses durch den Rahmen parallel zur Scheibenebene ermöglicht, da gerade im Bereich des Rahmens bei der Durchführung von Fluidanschlüssen üblicherweise besondere Probleme hinsichtlich der Gasdichtigkeit auftreten.

Das Durchführungselement hat im Schnitt quer zur Durchführungsrichtung vorzugsweise einen kreisförmigen, rechteckigen oder quadratischen Ausschnitt mit einer vorzugsweise runden, Ausnehmung für den Fluidanschluss. In der Scheibenebene hat das Durchführungselement vorzugsweise einen rechteckigen, trapezförmigen Querschnitt.

In einer bevorzugten Ausführungsform weist der Gusswerkstoff Epoxidharz aus oder besteht daraus. Epoxidharz hat den Vorteil, dass es als Gusswerkstoff formflexibel an den Fluidanschluss angegossen werden kann und gleichzeitig sowohl thermisch isolierend wirkt als auch eine hohe Gasdichtigkeit aufweist. Durch den grossflächigen stoffschlüssigen Verbund zwischen dem angegossenen Epoxidharz und dem Fluidanschluss wird auf diese Weise eine besonders gasdichte Verbindung hergestellt.

In einer bevorzugten Fortbildungsform ist zwischen mindestens einer der Scheiben und dem Durchführungselement ein Dichtungsmittel angeordnet, wobei das Dichtungsmittel vorzugsweise Butyl aufweist oder daraus besteht.

Die Verwendung von Butyl zur Herstellung einer gasdichten Verbindung ist bevorzugt. Insbesondere, wenn das Durchführungselement aus einem thermisch isolierenden Gusswerkstoff besteht oder diesen aufweist, wird es ermöglicht, Butyl zur Abdichtung zwischen dem Durchführungselement und einer oder beiden Scheiben eingzusetzen, da durch ein thermisch isolierendes Durchführungselement die Übertragung von zu hohen Temperaturen, die zum Fliessen des Dichtungsmittels führen könnten, verhindert wird. Durch die stoffschlüssige, gasdichte Verbindung zwischen dem Durchführungselement und dem Fluidanschluss einerseits und die Abdichtung des Fluidanschlusses gegenüber einer der Scheiben oder beider Scheiben mittels einem gasdichtem Dichtungsmittel wie Butyl andererseits kann die geforderte Gasdichtigkeit der Isolierglasanordnung gewähr-leistet werden.

In einer weiteren bevorzugten Ausführungsform der Erfindung weist das Durchführungs-element ein Formteil und ein durch Angiessen eines Gusswerkstoffs an den Fluidanschluss geschlossenes Volumen zwischen dem Formteil und dem Fluidanschluss auf.

In dieser Ausgestaltung wird ein Formteil, das ein vorgeformtes Bauteil darstellt und vorzugsweise bereits der äusseren Form des Durchführungselements entspricht, eingesetzt. Vorzugsweise wird dieses Formteil so am bzw. um den Fluidanschluss platziert, dass die Position der endgültigen Position des Durchführungselement am Fluidanschluss entspricht. Durch Vergiessen eines noch zwischen dem Formteil und dem Fluidanschluss verbleibenden Volumens, beispielsweise einem Ringspalt, wird eine stoffschlüssige Verbindung zwischen dem Formteil und dem Gusswerkstoff einerseits und dem Fluidanschluss und dem Gusswerkstoff andererseits hergestellt. Besonders bevorzugt ist dabei, dass das Formteil aus dem gleichen Gusswerkstoff besteht oder diesen enthält. Ferner ist bevorzugt, dass das Formteil vorgefertigt ist.

Besonders bevorzugt ist dabei eine Ausführungsform, bei der das Formteil eine Ausnehmung aufweist, deren Querschnitt zumindest in einem Abschnitt grösser ist als der Quer-schnitt des Fluidanschlusses.

Besonders bevorzugt ist, dass das Formteil beispielsweise in seiner Aussenkontur dem Durchführungselement entspricht und eine Ausnehmung aufweist, deren Querschnitt quer zur Durchführungsrichtung grösser als der Querschnitt des Fluidanschlusses, so dass der Fluidanschluss durch die Ausnehmung des Formteils durchgeführt werden kann und dann lediglich der verbleibende Ringraum zwischen der Ausnehmung des Formteils und dem Fluidanschluss mit dem Gusswerkstoff auszufüllen ist.

In einer weiteren vorteilhaften Ausgestaltung ist der Rahmen als Hohlprofil mit vorzugsweise rechteckigem Querschnitt ausgebildet. Der Rahmen ist vorzugsweise aus Aluminium, Stahl, Edelstahl oder Kunststoff ausgebildet. Auf einer dem Innenraum zugewandten Seite kann der Rahmen Öffnungen aufweisen, so dass ein Gasaustausch zwischen dem Inneren des Rahmens und dem Innenraum der Isolierglasanordnung möglich ist. Insbesondere ist es bevorzugt, dass im Rahmen ein Trocknungsmittel angeordnet ist, so dass Feuchtigkeit aus dem Innenraum der Isolierglasanordnung entfernt werden kann. Als Trocknungsmittel kann beispielsweise ein Molekularsieb wie Zeolith oder Silikagel zum Einsatz kommen.

In einer weiteren bevorzugten Ausführungsform weist der Rahmen eine Rahmenausnehmung zur Aufnahme des Durchführungselements auf, wobei die Rahmenausnehmung vorzugsweise durch eine Unterbrechung des Rahmens über den gesamten Rahmenquerschnitt gebildet ist.

Bei der Durchführung des Fluidanschlusses durch den Rahmen ist es von Vorteil, wenn der Rahmen eine Ausnehmung aufweist, die in ihren Abmessungen auf die Abmessungen des Durchführungselements abgestimmt ist. Eine besonders vorteilhafte Ausgestaltung ergibt sich, wenn das Durchführungselement im Wesentlichen quaderförmig ausgestaltet ist und ein Rahmen mit vorzugsweise rechteckigem Querschnitt entsprechend unterbrochen ist, so dass das Durchführungselement im Bereich der Ausnehmung an die Stelle des Rahmens tritt.

In einer bevorzugten Ausführungsform weist das Durchführungselement einen Aussenquerschnitt auf, der derart an einen Innenquerschnitt des Rahmens oder eine im Rahmen ausgebildete Aufnahme angepasst ist, dass der Rahmen auf das Durchführungselement aufschiebbar ist.

Beispielsweise kann das Durchführungselement im Querschnitt rechteckig sein zur Aufnahme im Hohlraum eines als Hohlprofil mit rechteckigem Querschnitt ausgebildeten Rahmens. Der Aussenquerschnitt des Durchführungselements ist dabei ist vorzugsweise derart auf den Innenquerschnitt des Rahmens abgestimmt, dass der Rahmen auf das Durchführungselement aufschiebbar ist. Alternativ zur Ausbildung des Rahmens als Hohlprofil kann der Rahmen auch eine entsprechende Aufnahme aufweisen, die zur Aufnahme eines Abschnitts des Durchführungselements ausgebildet ist und derart am Rahmen angeordnet ist, dass der Rahmen auf diesen Abschnitt des Durchführungselements aufschiebbar ist. Vorzugsweise können von zwei, vorzugsweise gegenüberliegenden, Seiten Rahmenabschnitte auf das Durchführungselement aufgeschoben werden.

Besonders bevorzugt ist es, dass der Rahmen und das Durchführungselement formschlüssig und/oder kraftschlüssig und/oder gasdicht miteinander verbunden sind.

Eine solche bevorzugte Verbindung zwischen Rahmen und Durchführungselement kann beispielsweise durch ein Haftmittel, das vorzugsweise Butyl aufweist oder enthält, realisiert werden.

Insbesondere ist es jedoch bevorzugt, dass der Aussenquerschnitt des Durchführungselements und der Innenquerschnitt des Rahmens oder eine im Rahmen ausgebildete Aufnahme so aufeinander abgestimmt sind, dass beim Aufschieben des Rahmens auf das Durchführungselement in dem Bereich, in dem der Rahmen auf das Durchführungselement aufgeschoben ist, eine formschlüssige und/oder kraftschlüssige, insbesondere gasdichte Verbindung entsteht. Vorzugsweise ist diese Verbindung grossflächig, das heisst erstreckt sich über den gesamten Abschnitt, indem der Rahmen auf das Durchführungselement aufgeschoben ist.

Insbesondere kann der Aussenquerschnitt des Durchführungselements geringfügig kleiner, geringfügig grösser oder gleich dem Innenquerschnitt des Rahmens oder einer am Rahmen ausgebildeten Aufnahme ausgebildet sein. Bevorzugt ist das Material des Durchführungselements geringfügig verformbarer als das Material des Rahmens, so dass beim Aufschieben des Rahmens auf das Durchführungselement letzteres so verformt wird, dass erstens ein Aufschieben des Rahmens möglich ist und zweitens eine bevorzugte gasdichte Verbindung entsteht.

In einer bevorzugten Ausführungsform weist der Rahmen eine dem Innenraum zugewandte Innenoberfläche und eine der Innenoberfläche gegenüberliegende, dem Innenraum abgewandte Aussenoberfläche auf, wobei auf der Aussenseite des Rahmens ein Dichtungsmittel, das vorzugsweise Polyurethan und/oder Silikon aufweist oder daraus besteht, angeordnet ist.

Auf einer dem Innenraum abgewandten Aussenoberfläche des Rahmens kann vorzugsweise eine Randversiegelung, beispielsweise aus Polyurethan oder Silikon, angeordnet sein, die sich vorzugsweise auf der Aussenoberfläche des Rahmens zwischen den beiden Glasscheiben erstreckt und vorzugsweise über den Umfang der Isolierglasanordnung aufgetragen ist.

In einer weiteren bevorzugten Ausführungsform ist an einer dem Fluidanschluss des Absorbers gegenüberliegenden Seite des Absorbers ein, im Querschnitt vorzugsweise zylinderförmig oder rechteckig ausgebildeter, Absorberabstandshalter mit einer Ausnehmung zur Lagerung eines Randabschnitts des Absorbers angeordnet.

Insbesondere beim Einsatz von Absorbern mit geringer Bauhöhe, beispielsweise Plattenabsorbern, bei denen zwei dünne Platten an den Rändern verbunden sind, ist es vorteilhaft, die, oft nur wenige Millimeter dicken, Randabschnitte des Absorbers so zu lagern, dass eine Verschiebung des Absorbers, insbesondere zu den beiden Scheiben hin, verhindert oder vermindert. Dabei ist insbesondere eine schwimmende Lagerung des Randabschnitts des Absorbers bevorzugt, um temperaturbedingten Abmessungsveränderungen des Absorbers Rechnung zu tragen. Bevorzugt ist daher ein Absorberabstandshalter beispielsweise aus temperaturbeständigem Kunststoff oder Keramik, der im Querschnitt zylinderförmig oder rechteckig ausgebildet ist und der in Längserstreckung eine entsprechende Lagerung für den Randabschnitt des Absorbers aufweist.

Insbesondere bei grösseren zu erwartenden Verformungen, beispielsweise bei grossen Isolierglasanordnungen, können auch mehrere solche Absorberabstandshalter vorgesehen sein.

Insbesondere ist es bevorzugt, dass die Ausnehmung des Absorberabstandshalters schlitzförmig ausgebildet ist, wobei der Schlitz sich vorzugsweise in Erstreckungsrichtung des Randabschnitts des Absorbers erstreckt.

Die Ausnehmung zur Lagerung des Randabschnitts als Schlitz hat den Vorteil einer einfachen Herstellung und kann gleichzeitig in einfacher Weise Verformungen des Randabschnitts ermöglichen, beispielsweise indem der Schlitz mindestens so lang ist wie der Absorberrandabschnitt in seiner maximalen Ausdehnung.

Der Schlitz kann im Inneren des Absorberabstandshalters enden, so dass der Absorberabstandshalter einen Randabschnitt des Absorbers aufnehmen kann.

Insbesondere falls mehrere Absorberabstandshalter erforderlich sind, kann es vorteilhaft sein, den Schlitz durch den Absorberquerschnitt hindurch auszubilden, so dass der Absorber durch den Absorberabstandshalter durchgeführt werden kann. In diesem Fall ist der Schlitz geeignet, nicht nur einen Randabschnitt, sondern einen beliebigen Abschnitt des Absorbers zu lagern, vorzugsweise schwimmend zu lagern.

In einer bevorzugten Ausführungsform ist die Isolierglasanordnung in einen Fensterrahmen integriert und der Fluidanschluss durch den Fensterrahmen hindurchgeführt, wobei der Fensterrahmen vorzugsweise Kunststoff, Holz oder Metall aufweist oder daraus besteht.

In dieser Ausführungsform dient die Isolierglasanordnung als Fensterscheibe für ein Fenster mit einem Fensterrahmen, beispielsweise in einem Flügelfenster. Der Fensterrahmen ist vorzugsweise mit einer Fensterzarge verbunden, so dass das Fenster geöffnet werden kann.

Hierdurch wird folglich eine Fensteranordnung mit einem Fensterrahmen, einer Fensterzarge und einer in den Fensterrahmen integrierten Isolierglasanordnung mit den vorstehenden Merkmalen gebildet.

Der Rahmen kann dabei vorzugsweise auch derart mit der Fensterzarge verbunden sein, dass das Fenster gekippt werden kann. Ein besonderer Vorteil dieser Ausführungsform ergibt sich dadurch, dass mit der Durchführung des Fluidanschlusses durch den Rahmen der Isolierglasanordnung parallel zu einer Scheibenebene der Fluidanschluss auch parallel zu der Scheibenebene durch den Fensterrahmen geführt werden kann und somit eine Integration der Isolierglasanordnung in ein Fenster möglich ist, bei der das Fenster in üblichen Anwendungsgebieten im privaten oder gewerblichen Hausbau eingesetzt werden kann, ohne dass Fluidanschlüsse des Absorbers sichtbar sind. Insbesondere im geschlossenen Zustand des Fensters sind die Fluidanschlüsse weder von aussen noch von innen sichtbar, da die Fluidanschlüsse bei geschlossenem Fenster vollständig im Inneren der Einheit aus Fensterrahmen und Fensterzarge verlaufen. Insbesondere ist es bevorzugt, dass zwei Fluidanschlüsse des Absorbers durch den Fensterrahmen hindurchgeführt sind. Ferner ist es bevorzugt, dass die Fluidanschlüsse auf einer Seite des Fensterrahmens angeordnet sind, die beim vollständigen Öffnen des Fensters eine Verbindung zur Fensterzarge hat.

Es ist besonders bevorzugt, dass an den Fluidanschluss eine, vorzugsweise flexible, Fluidleitung angeschlossen ist, die zumindest abschnittsweise in einer Fensterzarge angeordnet ist. Die Fluidleitung kann als Schlauch ausgebildet sein. Ferner kann die Fluidleitung Kunststoff und/oder Metall aufweisen oder daraus bestehen.

Ein Vorteil hierbei ist, dass auch eine oder mehrere an den einen oder mehrere Fluidanschlüsse angeschlossene Fluidleitung so innerhalb oder in einer Ausnehmung der Fensterzarge verläuft, dass die Fluidleitung bei geschlossenem Fenster nicht sichtbar ist. Vorzugsweise weist die Fensterzarge eine Ausnehmung zur Aufnahme der Fluidleitung auf in einem Bereich auf, der bei geschlossenem Fenster vom Fensterrahmen abgedeckt ist. Durch die bevorzugte Ausführung der Fluidleitung als flexible Leitung kann auf einfache Weise eine Verbindung von der zumindest abschnittsweise in der Fensterzarge verlaufenden Fluidleitung zu dem aus dem Fensterrahmen herausgeführten Fluidanschluss hergestellt werden.

Zum Einsatz kommen bevorzugt Kunststoff-, Holz- oder Metallfensterrahmen sowie entsprechende Zargen, die für die Aufnahme der Isolierglasanordnung und von einem, zwei oder mehreren Fluidanschlüssen sowie ggf. einer, zwei oder mehrerer Fluidleitungen ausgebildet sind, die sonst aber von der Montage und dem Anwendungsgebiet eingesetzt werden können wie herkömmliche Fenster. Auf diese Weise kann mit geringem Aufwand und Anpassungsbedarf an übrigen Bauelementen ein solarthermischer Absorber in einem Fenster integriert werden.

Gemäss einem weiteren Aspekt der Erfindung wird die Aufgabe gelöst durch ein Verfahren zur Herstellung einer Isolierglasanordnung, umfassend die Schritte Bereitstellen einer ersten und einer zweiten Glasscheibe, eines Rahmens, und eines solarthermischen Absorbers mit einem Fluidanschluss, Angiessen eines Gusswerkstoffs an den Fluidanschluss zur Formung eines Durchführungselements oder eines Teils davon, Anordnen der ersten und einer zweiten Glasscheibe, des Rahmens, und des Absorbers mit dem Durchführungselement und Fluidanschluss derart, dass der Absorber in einem von den Glasscheiben und dem Rahmen gebildeten Innenraum angeordnet und der Fluidanschluss durch das Durchführungselement aus dem Innenraum herausgeführt ist.

Besonders bevorzugt ist es, dass der Fluidanschluss mit dem Durchführungselement durch den Rahmen aus dem Innenraum herausgeführt ist.

In einer bevorzugten Fortbildung ist das Verfahren gekennzeichnet durch die Schritte Bereitstellen eines vorgeformten Formteils, Formung des Durchführungselements durch Schliessen eines Volumens zwischen dem Formteil und dem Durchführungselement durch Angiessen des Gusswerkstoffs an den Fluidanschluss.

Nach einer weiteren vorteilhaften Ausgestaltung des erfindungsgemässen Verfahrens ist zudem vorgesehen, dass das Formteil in einem Montagezustand an dem Fluidanschluss befestigt ist, vorzugsweise form- und/oder kraftschlüssig. In dieser Fortbildungsform kann das Formteil bereits vor dem Vergiessen des Volumens zwischen dem Formteil und dem Fluidanschluss am Fluidanschluss befestigt werden, vorzugsweise in der Position, in der das Durchführungselement am Fluidanschluss angeordnet sein soll. Die Verbindung kann beispielsweise durch eine Schnapp- oder Rastverbindung, beispielsweise durch Aufklipsen des Formteils auf den Fluidanschluss, realisiert sein. Das Formteil kann auch durch ein Befestigungselement, wie beispielsweise eine Schelle oder eine Klemme, am Fluidanschluss befestigt werden, wobei das Befestigungselement nach Vergiessen des Volumens zwischen Formteil und Fluidanschluss wieder entfernt werden kann. Die Befestigung des Formteils im Montagezustand am Fluidanschluss hat den Vorteil, dass während des Vergiessens des Volumens zwischen Formteil und Fluidanschluss keine zusätzlichen Haltemittel zur Fixierung des Formteils erforderlich sind.

Das erfindungsgemässe Verfahren und seine Fortbildungen weisen Merkmale beziehungsweise Verfahrensschritte auf, die sie insbesondere dafür geeignet machen, eine erfindungsgemässe Isolierglasanordnung und seine Fortbildungen bereitzustellen. Zu den Vorteilen, Ausführungsvarianten und Ausführungsdetails dieses Verfahrens und seiner Fortbildungen wird auf die vorangegangene Beschreibung zu den entsprechenden Vorrichtungsmerkmalen verwiesen.

Ein weiterer Aspekt der vorliegenden Erfindung betrifft vorteilhafte Verwendungen der erfindungsgemässen Isolierglasanordnung. So lässt sich diese in Gebäudefassaden integrieren. Ebenso ist eine Verwendung in Aufdachanlagen, wie auch Freiflächenanlagen möglich. Für die Vorteile dieser Verwendungen wird auf das Vorstehende verwiesen.

Bevorzugte Ausführungsformen der Erfindung werden beispielhaft anhand der beiliegenden Figuren beschrieben. Es zeigen:
Fig. 1: : einen Querschnitt durch ein erstes Ausführungsbeispiel einer Isolierglasanordnung;
Fig. 2: : einen Schnitt durch ein Detail von Fig. 1 in einer um 90[deg.] gedrehten Schnittansicht;
Fig. 3: : eine dreidimensionale, teilweise geschnittene Ansicht eines weiteren Ausführungsbeispiels einer Isolierglasanordnung;
Fig.4: : eine dreidimensionale Ansicht eines Teils eines Flügelfensters mit einer bevorzugten Ausführungsform einer Isolierglasanordnung und
Fig. 5: : eine dreidimensionale Ansicht eines Ausschnitts des Flügelfensters gemäss Figur 4.

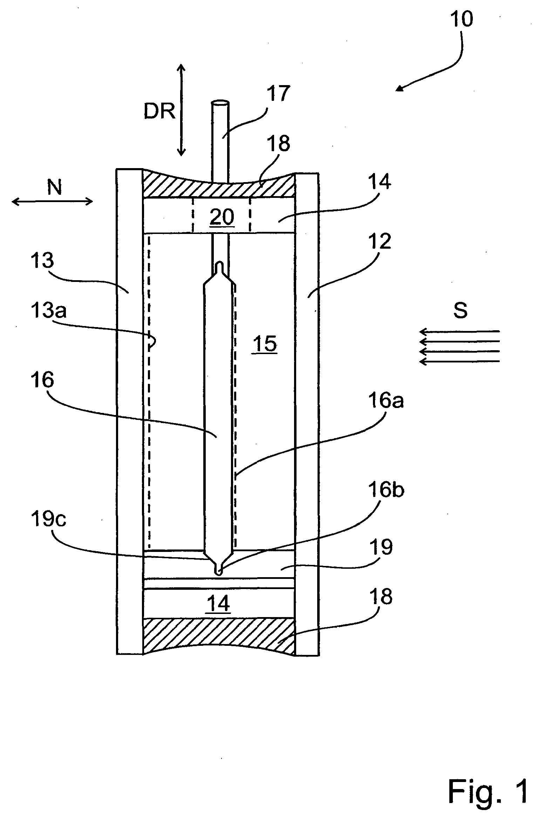

In Fig. 1 ist eine Isolierglasanordnung 10 mit einer ersten Glasscheibe 12 und einer zweiten Glasscheibe 13 sowie einem dazwischen angeordneten Rahmen 14 gezeigt. Der Rahmen 14 ist als Hohlprofil mit rechteckigem Querschnitt ausgebildet und verläuft umlaufend über den Umfang der Isolierglasanordnung 10. Von den Glasscheiben 12, 13 und dem Rahmen 14 ist ein Innenraum 15 gebildet, in dem ein solarthermischer Absorber 16 mit einem Fluidanschluss 17 angeordnet ist.

Die beiden Scheiben 12, 13 sind parallel zueinander und parallel zu einer Scheibenebene angeordnet und in zur Scheibenebene orthogonalen Richtung N durch den Rahmen 14 beabstandet. Der Fluidanschluss 17 ist in einer Durchführungsrichtung DR parallel zur Scheibenebene aus dem Innenraum 15 herausgeführt, so dass der solarthermische Absorber 16 in eine Fluidverbindung mit einem ausserhalb der Isolierglasanordnung bestehenden Fluidsystem (nicht dargestellt) gebracht werden kann. Ferner ist in Fig. 1 an der dem Fluidanschluss 17 gegenüberliegenden Seite des Absorbers 16 ein Absorberabstandshalter 19 angebracht, der hier einen rechteckigen Querschnitt mit einer schlitzförmigen Ausnehmung 19a zur Lagerung eines Randabschnitts 16b des Absorbers 16 aufweist. Die schlitzförmige Ausnehmung 19a ist vorzugsweise länger als die Ausdehnung des Absorbers 16 beziehungsweise des Randabschnitts 16b des Absorbers 16 in Richtung parallel zur Scheibenebene, so dass Längenänderungen des Absorbers aufgrund von thermischer Verformung kompensiert werden können (aus Übersichtlichkeitsgründen nicht im Detail dargestellt).

Der Innenraum 15 ist fluiddicht, insbesondere gasdicht abgedichtet. Vorzugsweise ist der Innenraum 15 mit einem Gas, wie beispielsweise Argon oder Krypton, ausgefüllt. Der Rahmen 14 kann auf seiner im Innenraum 15 zugewandten Seite Öffnungen aufweisen (nicht dargestellt), um einen Gasaustausch mit dem Innenraum 15 zu ermöglichen, wobei vorzugsweise ein Trocknungsmittel (nicht dargestellt) im Inneren des als Hohlprofil ausgebildeten Rahmens 14 angeordnet ist.

Auf einer dem Innenraum 15 abgewandten Aussenoberfläche des Rahmens 14 ist ein Dichtungsmittel 18, das vorzugsweise Polyurethan und/oder Silikon aufweist oder daraus besteht, ebenfalls umlaufend über den Umfang der Isolierglasanordnung 10, angeordnet.

Auf dem Absorber 16 ist eine selektive Beschichtung 16a auf der der Sonneneinstrahlung S zugewandten Seite aufgebracht. Die der Sonneneinstrahlung S zugewandte Glasscheibe 12 ist vorzugsweise als eisenarmes Glas mit gegebenenfalls einer Antireflexbeschichtung ausgebildet. Die auf der der Sonneneinstrahlung abgewandten Seite der Isolierglasanordnung angeordnete Scheibe 13 ist auf deren dem Innenraum 15 zugewandten Seite mit einer Low-E-Schicht 13a versehen.

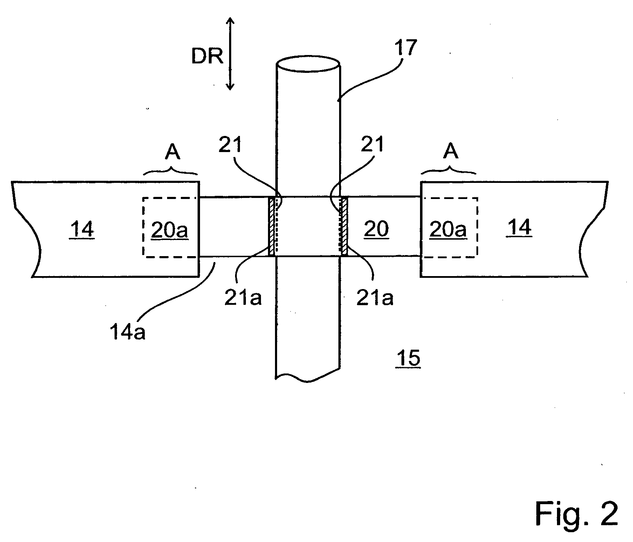

In Fig. 2 ist ein Detail der Durchführung des Fluidanschlusses 17 aus Fig. 1 in einem Schnitt parallel zur Scheibenebene dargestellt. Das Dichtungsmittel 18 sowie die Scheiben 12, 13 sind zur Vereinfachung in Fig. 2 nicht dargestellt. Der Fluidanschluss 17 ist durch ein Durchführungselement 20 aus dem Innenraum herausgeführt. Der Rahmen 14 weist eine Rahmenausnehmung 14a zur Aufnahme des Durchführungselements 20 auf, wobei die Rahmenausnehmung 14a hier als eine Unterbrechung des Rahmens 14 über den gesamten Rahmenquerschnitt gebildet ist.

An der Schnittstelle 21 zwischen Durchführungselement 20 und Fluidanschluss 17 ist eine flächige stoffschlüssige Verbindung durch Angiessen eines Gusswerkstoffs 21 a an den Fluidanschluss 17 hergestellt. Damit kann kein Gas zwischen dem Durchführungselement 20 und dem Fluidanschluss 17 ein- oder austreten.

Der Fluidanschluss 20 hat im hier dargestellten Beispiel einen rechteckförmigen Aussenquerschnitt, der derart an den Innenquerschnitt des als Hohlprofil ausgebildeten Rahmens angepasst ist, dass der Rahmen 14 auf das Durchführungselement aufschiebbar ist. Im in Fig. 2 gezeigten Beispiel sind auf den beiden gegenüberliegenden Seiten des Durchführungselements 20 jeweils Rahmenabschnitte in den mit A bezeichneten Bereichen auf das Durchführungselement 20 aufgeschoben. Falls der Rahmen nicht als Hohlprofil ausgebildet ist, weist der Rahmen vorzugsweise eine Aufnahme auf, in die jeweils ein Abschnitt 20a des Durchführungselements 20 aufgenommen werden kann. Der Aussenquerschnitt des Durchführungselements 20, insbesondere im Abschnitt 20a des Durchführungselements 20, ist so auf den Innenquerschnitt des Rahmens 14 oder einem Rahmen ausgebildete Aufnahme angepasst, dass eine gasdichte Verbindung, vorzugsweise durch Form- und/oder Kraftschluss zwischen dem Rahmen 14 und dem Durchführungselement 20 beim Aufschieben des Rahmens 14 auf das Durchführungselement 20, insbesondere auf dessen Abschnitt 20a, entsteht.

Das Durchführungselement 20 ist ganz oder teilweise aus einem Gusswerkstoff geformt, der an den Fluidanschluss angegossen ist. Der Gusswerkstoff enthält vorzugsweise Epoxidharz oder besteht daraus. Das Durchführungselement 20 kann beispielsweise ganz aus dem Gusswerkstoff bestehen, wenn eine Form an den Fluidanschluss angebracht wird, die mit dem Gusswerkstoff ausgefüllt wird, und die nach Aushärten des Gusswerkstoffs wieder entfernt wird. Alternativ kann auch mit einer verlorenen Form oder einem vorgeformten Formteil gearbeitet werden, wobei die verlorene Form beziehungsweise ein zwischen dem Formteil und dem Fluidanschluss 17 verbleibendes Volumen mit dem Gusswerkstoff ausgegossen und damit nach Aushärten des Gusswerkstoffs eine fluiddichte stoffschlüssige Verbindung zwischen dem Gusswerkstoff und dem Fluidanschluss sowie dem Gusswerkstoff und der verlorenen Form beziehungsweise dem Formteil hergestellt wird. Die verlorene Form beziehungsweise das Formteil können aus einem anderen Material ausgebildet sein, vorzugsweise bestehen sie jedoch aus dem gleichen Gusswerkstoff, mit dem die verlorene Form beziehungsweise das Volumen zwischen Formteil und Fluidanschluss ausgefüllt wird.

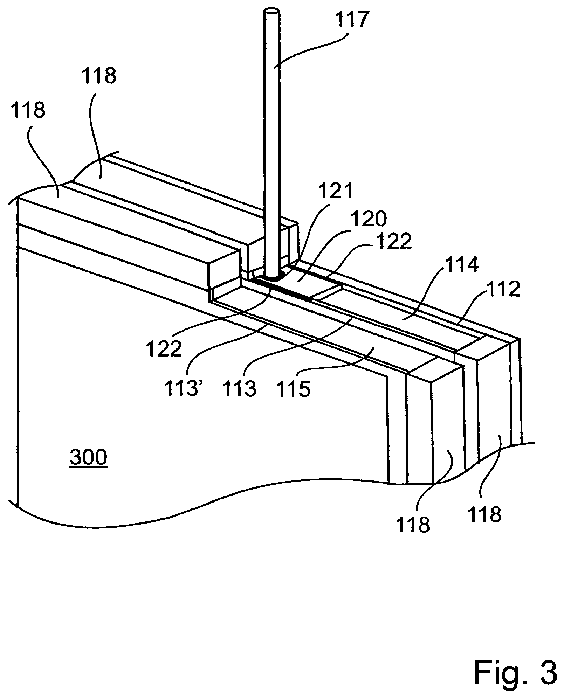

In Fig. 3 ist ein Teil einer Isolierglasanordnung dreidimensional und teilweise geschnitten dargestellt. Bei dem in Fig. 3 gezeigten Aufbau handelt es sich um eine Isolierglasanordnung mit drei Glasscheiben 112, 113 und 113'. Zwischen den Scheiben 112 und 113 ist ein Rahmen 114 angeordnet. Von den Scheiben 112, 113 und dem Rahmen 114 wird ein Innenraum gebildet, in dem ein solarthermischer Absorber mit einem Fluidanschluss 117 angeordnet ist. Alle drei Scheiben 112, 113, 113' sind parallel zueinander und parallel zu einer Scheibenebene 300 angeordnet. Auch zwischen den Scheiben 113, 113' ist ein Rahmen 15 angeordnet und von den Scheiben 113, 113' und dem dazwischen angeordneten Rahmen 115 ein weiterer Innenraum gebildet. Auf den dem jeweiligen Innenraum abgewandten Oberflächen der Rahmen 114, 115 ist umlaufend über den Umfang der Isolierglasanordnung ein Dichtungsmittel 118 aufgebracht, das vorzugsweise Polyurethan und/oder Silikon aufweist oder daraus besteht.

Der Fluidanschluss 117 ist durch ein Durchführungselement 120 durch den Rahmen 114 aus dem Innenraum zwischen den beiden Scheiben 112 und 113 herausgeführt.

Zwischen dem Durchführungselement 120 und der Scheibe 112 sowie zwischen dem Durchführungselement 120 und der Scheibe 113 ist jeweils ein Dichtungsmittel 122 angeordnet, das vorzugsweise Butyl aufweist oder daraus besteht. Das Durchführungselement 120 ist durch Angiessen eines Gusswerkstoffs 121 an den Fluidanschluss 117 angeformt, so dass zwischen dem Durchführungselement 120 und dem Fluidanschluss 117 eine stoffschlüssige und gasdichte Verbindung ausgebildet ist. Bei dem verwendeten Gusswerkstoff 121 handelt es sich wiederum um bevorzugt um einen Epoxidharz. Aufgrund der geringen Wärmeleitung des Gusswerkstoffs (Epoxidharz) stellt sich im Gusswerkstoff ein starker Temperaturgradient ein, so dass die Abdichtung zwischen dem Durchführungselement 120 und den Scheiben 112, 113 einer noch vergleichsweise nur noch geringen Temperaturbelastung ausgesetzt ist.

Durch die in den Fig. 1 bis 3 dargestellte Lösung ist die Durchführung eines Fluidanschlusses 17, 117 durch einen Rahmen 14, 114 aus einem Innenraum 15 möglich, wobei gleichzeitig die Gasdichtigkeit der Isolierglasanordnung 10 gewährleistet ist, da sowohl zwischen dem Durchführungselement 20, 120 gegenüber dem Fluidanschluss 17, 117 als auch gegenüber den Scheiben 12, 13, 112, 113 sowie gegenüber dem Rahmen 14, 114 eine gasdichte Verbindung gewährleistet ist. Durch eine thermisch isolierende Ausbildung des Gusswerkstoffes, insbesondere durch Verwendung von Epoxidharz, kann zur

Abdichtung zwischen dem Durchführungselement 20, 120 und den Scheiben 12, 13, 112, 113, wie vorstehend erwähnt, ein weniger temperaturbeständiges, jedoch hoch gasdichtes Dichtungsmittel 122, das beispielsweise Butyl enthält oder daraus besteht, eingesetzt werden. Durch eine solche hoch gasdichte Herausführung des Fluidanschlusses 17, 117 eines Absorbers 16 aus dem Rahmen 14, 114 einer Isolierglasanordnung 10 kann der Anschluss und die Montage der Isolierglasanordnung, beispielsweise bei der Fassadengestaltung, vereinfacht und verbessert werden. Durch den Verzicht auf Leitungen oder Anschlüsse in einer zur Scheibenebene orthogonalen Richtung können zudem Beschädigungen oder Verschmutzungen dieser Leitungen und Anschlüsse vermieden werden.

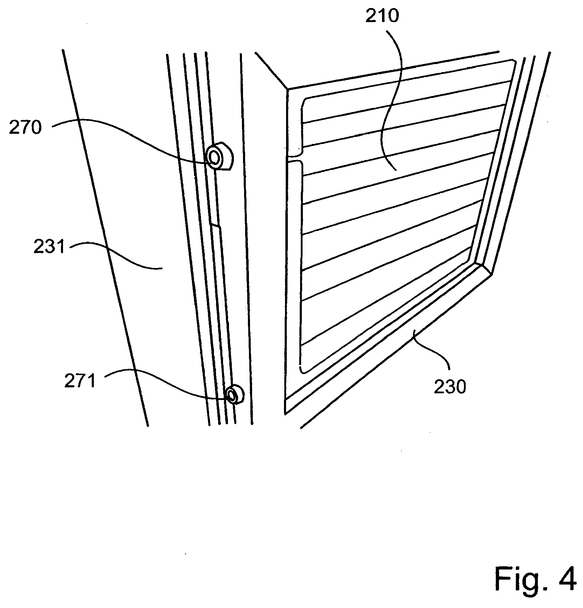

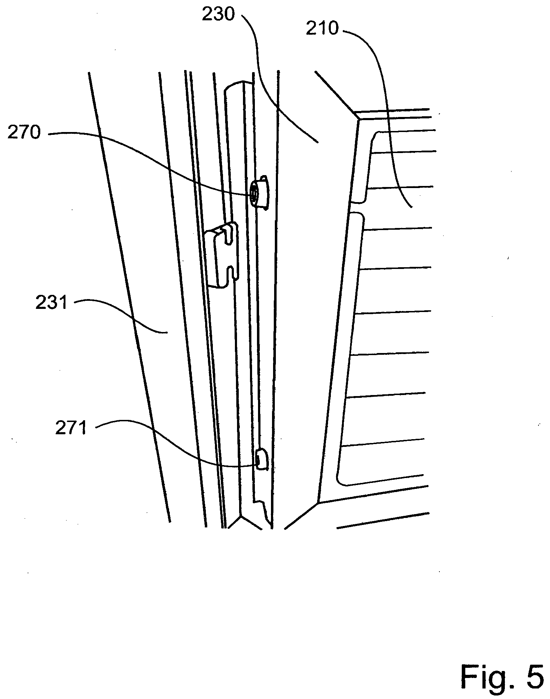

In den Figuren 4 und 5 ist der Einsatz einer bevorzugten Ausführungsform einer Fensteranordnung umfassend eine Isolierglasanordnung 210 in einem Flügelfenster dargestellt. Die Fensteranordnung 210 umfasst ferner einen Fensterrahmen 230, der an einer Fensterzarge 231 befestigt ist, so dass der Fensterrahmen 230 mit der Isolierglasanordnung 210 geöffnet werden kann. In der in den Figuren 4 und 5 gezeigten Situation ist das Fenster vollständig geöffnet, das Fenster kann jedoch auch gekippt werden.

Die Isolierglasanordnung 210 der Fensteranordnung der Fig. 4 weist zwei Fluidanschlüsse 270, 271 auf, die parallel zur Scheibenebene durch den Rahmen der Isolierglasanordnung 210 und durch den Fensterrahmen 230 herausgeführt sind. An den Fluidanschlüssen 270, 271 werden vorzugsweise eine, zwei oder mehrere Fluidleitungen (nicht dargestellt), die beispielsweise als flexible Metall- oder Kunststoffschläuche ausgebildet sein können, angeschlossen. Die Fluidleitung(en) verläuft bzw. verlaufen vorzugsweise in einer Ausnehmung in der Fensterzarge 231, die vorzugsweise auf einer Seite der Fensterzarge 231 angeordnet ist, die bei geschlossenem Fenster vom Fensterrahmen 230 verdeckt ist. Dies hat den Vorteil, dass bei geschlossenem Fenster die Fluidanschlüsse 270, 271 und die Fluidleitung(en) derart im Fensterrahmen 230 und in der Fensterzarge 231 angeordnet sind, dass weder die Fluidanschlüsse 270, 271 noch die Fluidleitung(en) von außen oder von innen sichtbar sind.

## Patentansprüche

1. Isolierglasanordnung (10) mit einer ersten und einer zweiten Glasscheibe (12, 13, 112, 113), einem dazwischen angeordneten Rahmen (14, 114), einem von den Glasscheiben (12, 13, 112, 113) und dem Rahmen (14, 114) gebildeten Innenraum (15), der mit einem Gas gefüllt ist, einem in dem Innenraum angeordneten solarthermischen Absorber (16) mit einem Fluidanschluss (17, 117), und einem Durchführungselement (20, 120), durch das der Fluidanschluss (17, 117) aus dem Innenraum (15) herausgeführt ist, **dadurch gekennzeichnet, dass** das Durchführungselement (20, 120) zumindest teilweise aus einem Gusswerkstoff besteht, der an den Fluidanschluss (17, 117) angegossen und thermisch isolierend ist, so dass das Durchführungselement (20,120) die Temperaturen des Fluidanschlusses (17,117) so isoliert, dass an den Rändern des Durchführungselements (20,120) Temperaturen von unter 110°C auftreten.

2. Isolierglasanordnung (10) nach Anspruch 1, **dadurch gekennzeichnet, dass** der Fluidanschluss (17, 117) mit dem Durchführungselement (20, 120) durch den Rahmen (14, 114) aus dem Innenraum (15) herausgeführt ist.

3. Isolierglasanordnung (10) nach Anspruch 1 oder 2, **dadurch gekennzeichnet, dass** der Gusswerkstoff Epoxidharz aufweist oder daraus besteht.

4. Isolierglasanordnung (10) nach einem der Ansprüche 1 bis 3, **dadurch gekennzeichnet, dass** zwischen mindestens einer der Scheiben (12, 13, 112, 113) und dem Durchführungselement (20, 120) ein Dichtungsmittel (122) angeordnet ist, wobei das Dichtungsmittel (122) vorzugsweise Butyl aufweist oder daraus besteht.

5. Isolierglasanordnung (10) nach einem der Ansprüche 1 bis 4, **dadurch gekennzeichnet, dass** das Durchführungselement (20, 120) ein Formteil und ein durch Angiessen eines Gusswerkstoffs an den Fluidanschluss (17, 117) geschlossenes Volumen zwischen dem Formteil und dem Fluidanschluss (17, 117) aufweist, wobei vorzugsweise das Formteil eine Ausnehmung aufweist, deren Querschnitt zumindest in einem Abschnitt grösser ist als der Querschnitt des Fluidanschlusses (17, 117).

6. Isolierglasanordnung (10) nach einem der Ansprüche 1 bis 5, **dadurch gekennzeichnet, dass** der Rahmen (14, 114) eine Rahmenausnehmung (14a) zur Aufnahme des Durchführungselements (20, 120) aufweist, wobei die Rahmenausnehmung (14a) vorzugsweise durch eine Unterbrechung des Rahmens (14, 114) über den gesamten Rahmenquerschnitt gebildet ist.

7. Isolierglasanordnung (10) nach einem der Ansprüche 1 bis 6, **dadurch gekennzeichnet, dass** das Durchführungselement (20, 120) einen Aussenquerschnitt aufweist, der derart an einen Innenquerschnitt des Rahmens (14, 114) oder eine im Rahmen (14, 114) ausgebildete Aufnahme angepasst ist, dass der Rahmen (14, 114) auf das Durchführungselement (20, 120) aufschiebbar ist.

8. Isolierglasanordnung (10) nach einem der Ansprüche 1 bis 7, **dadurch gekennzeichnet, dass** der Rahmen (14, 114) und das Durchführungselement (20, 120) formschlüssig und/oder kraftschlüssig und/oder gasdicht miteinander verbunden sind.

9. Isolierglasanordnung (10) nach einem der Ansprüche 1 bis 8, **dadurch gekennzeichnet, dass** an einer dem Fluidanschluss (17, 117) des Absorbers gegenüberliegenden Seite des Absorbers (16) ein, im Querschnitt vorzugsweise zylinderförmig oder rechteckig ausgebildeter, Absorberabstandshalter (19) mit einer Ausnehmung (19a) zur Lagerung eines Randabschnitts (16b) des Absorbers (16) angeordnet ist.

10. Isolierglasanordnung (210) nach einem der vorhergehenden Ansprüche 2 bis 9, **dadurch gekennzeichnet, dass** die Isolierglasanordnung (210) in einen Fensterrahmen (230) integriert ist und der Fluidanschluss (270, 271) durch den Fensterrahmen (230) hindurchgeführt ist, wobei der Fensterrahmen vorzugsweise Kunststoff, Holz oder Metall aufweist oder daraus besteht.

11. Fensteranordnung (210) mit einem Fensterrahmen (230), einer Fensterzarge (231) und einer in den Fensterrahmen (230) integrierten Isolierglasanordnung (210) nach einem der Ansprüche 1 bis 10.

12. Fensteranordnung (210) nach Anspruch 11, **dadurch gekennzeichnet, dass** an den Fluidanschluss (270, 271) eine, vorzugsweise flexible, Fluidleitung angeschlossen ist, die zumindest abschnittsweise in der Fensterzarge (231) angeordnet ist.

13. Verfahren zur Herstellung einer Isolierglasanordnung (10), umfassend die Schritte:
- Bereitstellen einer ersten und einer zweiten Glasscheibe (12, 13, 112, 113), eines Rahmens (14, 114), und eines solarthermischen Absorbers (16) mit einem Fluidanschluss (17, 117),
- Angiessen eines Gusswerkstoffs an den Fluidanschluss (17, 117) zur Formung eines Durchführungselements (20, 120) oder eines Teils davon, wobei der Gusswerkstoff, thermisch isolierend ist, so dass das Durchführungselement (20,120) die Temperaturen des Fluidanschusses (17,117) so isoliert, dass an den Rändern des Durchführungselementes (20,120) Temperaturen von unter 110°C auftreten.
- Anordnen der ersten und einer zweiten Glasscheibe (12, 13, 112, 113), des Rahmens (14, 114) und des Absorbers (16) mit dem Durchführungselement (20, 120) und Fluidanschluss (17, 117) derart, dass der Absorber in einem von den Glasscheiben (12, 13, 112, 113) und dem Rahmen (14, 114) gebildeten Innenraum (15) angeordnet und der Fluidanschluss (17, 117) durch das Durchführungselement (20, 120) durch den Rahmen (14, 114) aus dem Innenraum (15) herausgeführt ist, und
- Befüllen des Innenraums (15) mit einem Gas.

14. Verfahren nach Anspruch 13, **gekennzeichnet durch** die Schritte:
- Bereitstellen eines vorgeformten Formteils,
- Formung des Durchführungselements (20, 120) **durch** Schliessen eines Volumens zwischen dem Formteil und dem Durchführungselement (20, 120) durch Angiessen des Gusswerkstoffs an den Fluidanschluss (17, 117).

15. Verfahren nach Anspruch 14, **dadurch gekennzeichnet, dass** das das Formteil vor der Formung des Durchführungselements an dem Fluidanschluss (17, 117) befestigt wird, vorzugsweise form- und/oder kraftschlüssig.

## Claims

1. An insulating glass arrangement (10) comprising a first and a second pane of glass (12, 13, 112, 113), a frame (14, 114) disposed between the latter, an inner space (15) formed by the panes of glass (12, 13, 112, 113) and the frame (14, 114) and that is filled with a gas, a solar thermal absorber (16) disposed in the inner space and with a fluid connection (17, 117) and a feedthrough element (20, 12) by means of which the fluid connection (17, 117) is guided out of the inner space (15), **characterised in that** the feedthrough element (20, 210) is at least partially made of a casting material that is cast on the fluid connection (17, 117) and is thermally insulating so that the feedthrough element (20, 120) insulates the temperatures of the fluid connection (17, 117) so that temperatures of below 110°C occur at the edges of the feedthrough element (20, 120).

2. The insulating glass arrangement (10) according to Claim 1, **characterised in that** the fluid connection (17, 117) with the feedthrough element (20, 120) is guided through the frame (14, 114) out of the inner space (15).

3. The insulating glass arrangement (10) according to Claim 1 or 2, **characterised in that** the casting material comprises epoxy resin or is made of the latter.

4. The insulating glass arrangement (10) according to any of Claims 1 to 3, **characterised in that** a sealing means (122) is disposed between at least one of the panes (12, 13, 112, 113) and the feedthrough element (20, 120), the sealing means (122) preferably comprising butyl or being made of the latter.

5. The insulating glass arrangement (10) according to any of Claims 1 to 4, **characterised in that** the feedthrough element (20, 120) has a moulded part and a volume between the moulded part and the fluid connection (17, 117) closed by casting a casting material onto the fluid connection (17, 117), the moulded part preferably having a recess the cross-section of which is larger in at least one section than the cross-section of the fluid connection (17, 117).

6. The insulating glass arrangement (10) according to any of Claims 1 to 5, **characterised in that** the frame (14, 114) has a frame recess (14a) for receiving the feedthrough element (20, 120), the frame recess (14a) preferably being formed by a break in the frame (14, 114) over the entire frame cross-section.

7. The insulating glass arrangement (10) according to any of Claims 1 to 6, **characterised in that** the feedthrough element (20, 120) has an outer cross-section that is adapted to an inner cross-section of the frame (14, 114) or a receiver formed in the frame (14, 114) such that the frame (14, 114) can be pushed onto the feedthrough element (20, 120).

8. The insulating glass arrangement (10) according to any of Claims 1 to 7, **characterised in that** the frame (14, 114) and the feedthrough element (20, 120) are connected to one another in a form-locking and/or force-fitting and/or gas-tight manner.

9. The insulating glass arrangement (10) according to any of Claims 1 to 8, **characterised in that** there is disposed on a side of the absorber (16) lying opposite the fluid connection (17, 117) of the absorber an absorber spacer (18), preferably cylindrical or rectangular in form, with a recess (19a) for the mounting of an edge section (16b) of the absorber (16).

10. The insulating glass arrangement (210) according to any of the preceding Claims 2 to 9, **characterised in that** the insulating glass arrangement (210) is integrated into a window frame (230) and the fluid connection (270, 271) is guided through the window frame (230), the window frame preferably comprising or being made of plastic, wood or metal.

11. A window arrangement (210) comprising a window frame (230), a window architrave (231) and an insulating glass arrangement (21) integrated into the window frame (230) according to any of Claims 1 to 10.

12. The window arrangement (210) according to Claim 11, **characterised in that** there is connected to the fluid connection (270, 271) a preferably flexible fluid line that is disposed at least partially in the window architrave (231).

13. A method for the production of an insulating glass arrangement (10) comprising the steps:
- providing a first and a second pane of glass (12, 13, 112, 113), a frame (14, 114) and a solar thermal absorber (16) with a fluid connection (17, 117),
- casting a casting material on the fluid connection (17, 117) so as to form a feedthrough element (20, 120) or a part of the latter, the casting material being thermally insulating so that the feedthrough element (20, 120) insulates the temperatures of the fluid connection (17, 117) so that temperatures of below 110°C occur at the edges of the feedthrough element (20, 120),
- arranging the first and a second pane of glass (12, 13, 112, 113) of the frame (14, 114) and of the absorber (16) with the feedthrough element (20, 120) and the fluid connection (17, 117) such that the absorber is disposed in an inner space (15) formed by the panes of glass (12, 13, 112, 113) and the frame (14, 114) and the fluid connection (17, 117) is guided through the frame (14, 114) out of the inner space (15) by the feedthrough element (20, 120), and
- filling the inner space (15) with a gas.

14. The method according to Claim 13, **characterised by** the steps:
- providing a pre-moulded moulded part,
- moulding the feedthrough element (20, 120) by closing a volume between the moulded part and the feedthrough element (20, 120) by casting the casting material onto the fluid connection (17, 117).

15. The method according to Claim 14, **characterised in that** before moulding the feedthrough element the moulded part is fastened onto the fluid connection (17, 117), preferably with form-locking and/or force-fit.

## Revendications

1. Système de vitres isolantes (10) comprenant une première et une deuxième plaque de verre (12, 13, 112, 113), un cadre (14, 114) disposé entre celles-ci, un espace intérieur (15) rempli d'un gaz et formé par les plaques de verre (12, 13, 112, 113) et le cadre (14, 114), un absorbeur thermo-solaire (16) disposé dans l'espace intérieur et équipé d'un raccord de fluide (17, 117), et avec un élément de passage (20, 120) à travers lequel le raccord de fluide (17, 117) est fait sortir de l'espace intérieur (15), **caractérisé en ce que** l'élément de passage (20, 120) est fait, au moins partiellement, à base d'un matériau de moulage thermiquement isolant qui est moulé sur le raccord de fluide (17, 117) de telle sorte que l'élément de passage (20, 120) isole les températures du raccord de fluide (17, 117) de telle manière que les bords de l'élément de passage (20, 120) présentent des températures de moins de 110°C.

2. Système de vitres isolantes (10) selon la revendication 1, **caractérisé en ce que** le raccord de fluide (17, 117) avec l'élément de passage (20, 120) est sorti de l'espace intérieur (15) via le cadre (14, 114).

3. Système de vitres isolantes (10) selon la revendication 1 ou 2, **caractérisé en ce que** le matériau de moulage comprend une résine époxydique ou consiste de celle-ci.

4. Système de vitres isolantes (10) selon l'une des revendications 1 à 3, **caractérisé en ce qu'**un agent d'étanchéité (122) se trouve au moins entre une des vitres (12, 13, 112, 113) et l'élément de passage (20, 120), l'agent d'étanchéité (122) comprenant un butyle ou consiste de celui-ci.

5. Système de vitres isolantes (10) selon l'une des revendications 1 à 4, **caractérisé en ce que** l'élément de passage (20, 120) comporte une pièce moulée et un volume fermé qui est créé lorsqu'un matériau de moulage est moulé sur le raccord de fluide (17, 117) et qui se trouve entre la pièce moulée et le raccord de fluide (17, 117), de préférence, la pièce moulée disposant d'une cavité dont la section est, au moins dans une partie, plus importante que la section transversale du raccord de fluide (17, 117).

6. Système de vitres isolantes (10) selon l'une des revendications 1 à 5, **caractérisé en ce que** le cadre (14, 114) dispose d'une évidemment (14a) pour le logement de l'élément de passage (20, 120), l'évidemment du cadre (14a) étant de préférence formée par une interruption du cadre (14, 114) qui s'étend sur toute la section du cadre.

7. Système de vitres isolantes (10) selon l'une des revendications 1 à 6, **caractérisé en ce que** l'élément de passage (20, 120) dispose d'une section extérieure qui est adaptée à une section intérieure du cadre (14, 114) ou à un logement créé dans le cadre (14, 114) de telle sorte que le cadre (14, 114) peut être glissé sur l'élément de passage (20, 120).

8. Système de vitres isolantes (10) selon l'une des revendications 1 à 7, **caractérisé en ce que** le cadre (14, 114) et l'élément de passage (20, 120) sont liés par obstacle et/ou par adhérence et/ou hermétiquement.

9. Système de vitres isolantes (10) selon l'une des revendications 1 à 8, **caractérisé en ce qu'**un écarteur d'absorbeur (19) dont la section étant de préférence cylindrique ou rectangulaire est disposé sur un côté de l'absorbeur (16) se trouvant en face du raccord de fluide (17, 117) de l'absorbeur, écarteur d'absorbeur (19) disposant d'une cavité (19a) pour monter d'une partie périphérique (16b) de l'absorbeur (16).

10. Système de vitres isolantes (210) selon l'une quelconque des revendications précédentes 2 à 9, **caractérisé en ce que** le système de vitres isolantes (210) est intégré dans un châssis de fenêtre (230) et que le raccord de fluide (270, 271) est guidé à travers le châssis de fenêtre (230), le châssis de fenêtre comprenant de préférence, d'une matière plastique, d'un bois ou d'un métal ou consiste de ceux-ci.

11. Système de fenêtres (210) avec un châssis de fenêtre (230), une huisserie (231) et un système de vitres isolantes (210) intégré dans le châssis de fenêtre (230) selon l'une des revendications 1 à 10.

12. Système de fenêtres (210) selon la revendication 11, **caractérisé en ce qu'**une conduite de fluide étant de préférence souple est raccordée au raccord de fluide (270, 271), la conduite étant disposée au moins partiellement dans l'huisserie de fenêtres (231).

13. Procédé de fabrication d'un système de vitres isolantes (10), comprenant les étapes suivantes:
- mettre à disponibilité une première et une deuxième vitre (12, 13, 112, 113), d'un cadre (14, 114) et d'un absorbeur thermo-solaire (16) ayant un raccord de fluide (17, 117);
- mouler un matériau de moulage sur le raccord de fluide (17, 117) pour la formation d'un élément de passage (20, 120) ou d'une partie de ce dernier, le matériau de moulage étant thermiquement isolant de telle sorte que l'élément de passage (20, 120) isole les températures du raccord de fluide (17, 117) de telle manière que les bords de l'élément de passage (20, 120) présentent des températures de moins de 110°C;
- poser la première et une deuxième plaque de verre (12, 13, 112, 113), le cadre (14, 114) et l'absorbeur (16) avec l'élément de passage (20, 120) et le raccord de fluide (17, 117) de telle sorte que l'absorbeur est disposé dans un espace intérieur (15) formé par les plaques de verre (12, 13, 112, 113) et par le cadre (14, 114) et que le raccord de fluide (17, 117) est sorti de l'espace intérieur (15) via l'élément de passage (20, 120) via le cadre (14, 114);
- remplir l'espace intérieur (15) avec un gaz.

14. Procédé selon la revendication 13, **caractérisé par** les étapes suivantes:
- mettre à disponibilité une pièce moulée préformée,
- former l'élément de passage (20, 120) en fermant un volume entre la pièce moulée et l'élément de passage (20, 120) en coulant du matériau de moulage sur le raccord de fluide (17, 117).

15. Procédé selon la revendication 14, **caractérisé en ce que** la pièce moulée est fixée, de préférence par obstacle ou par adhérence, au raccord de fluide (17, 117) avant que l'élément de passage ne soit formé.
